# EUROPEAN PATENT APPLICATION

(11) **EP 4 775 381 A2**
(43) Date of publication of application: **15.07.2026**
(21) Application number: 26178906.9
(22) Date of filing: 15.05.2026
(51) Int. Cl.: B29C 64/124, B29C 64/205, B29C 64/227, B29C 64/245, B29C 64/255, B29C 64/30, B33Y 10/00, B33Y 30/00, B33Y 40/00

(54) **INFLATION MECHANISM, PRINTING DEVICE, AND PRINTING SYSTEM**

(30) Priority: 31.12.2025 CN 202512060642
(71) Applicant: Shining 3D Tech Co., Ltd., Hangzhou, Zhejiang 311258 (CN)
(72) Inventor: QIAN, Huili, Hangzhou, 311258 (CN); ZHAO, Xiaobo, Hangzhou, 311258 (CN); CHEN, Da, Hangzhou, 311258 (CN); WU, Siyuan, Hangzhou, 311258 (CN); WU, Jun, Hangzhou, 311258 (CN)
(74) Representative: Dai, Simin

(57) **Abstract**

Embodiments of the present application provide an inflation mechanism, a printing device, and a printing system, relating to the field of 3D printing technology. The inflation mechanism includes: an air pump (210); and an air path (230), where one end of the air path (230) is connected to an output end of the air pump (210), and the other end of the air path (230) is configured to communicate with a printing chamber (740) of a printing module.

## Description

### TECHNICAL FIELD

The present application relates to the field of 3D printing technology, and in particular, to an inflation mechanism, a printing device, and a printing system.

### BACKGROUND

A light-curing 3D printing device irradiates liquid photosensitive resin by using a light source with a specific wavelength (such as ultraviolet light), causing the resin to cure layer by layer so as to manufacture three-dimensional objects. It is widely used in fields such as dental restoration and industrial model making.

In the related art, a light-curing 3D printing device includes a material box. During a printing process, a light source emits light from below the material box, and the light passes through a light-transmitting component at the bottom of the material box and irradiates photosensitive resin in the material box. The photosensitive resin undergoes a light-curing reaction under the action of the light. As the light source exposes the photosensitive resin layer by layer according to a slice shape of a printed model, the photosensitive resin is cured layer by layer according to the slice shape. Each printed layer adheres to a build platform or a previous printed layer, thereby forming a printed object on the build platform.

In the related art, during the printing process, after one layer is cured, the build platform is lifted to allow the resin to self-level, before the next layer begins to be cured. Resin used in dental applications generally has a relatively high viscosity, and time required for the resin to self-level constitutes part of waiting time for printing, thereby extending overall printing time. In addition, the build platform needs to be lifted to a relatively high height to peel off the printed layer from a light-transmitting film at the bottom of the material box before the next layer can be printed, which affects printing efficiency.

### SUMMARY

Embodiments of the present application provide an inflation mechanism, a printing device, and a printing system, which are used to solve the technical problems in the related art that the resin used in dental applications has a relatively high viscosity, and time required for the resin to self-level constitutes part of the waiting time for printing, thereby extending the overall printing time, and the build platform needs to be lifted to a relatively high height to peel off the printed layer from the light-transmitting film at the bottom of the material box before the next layer can be printed, which affects the printing efficiency.

According to a first aspect, an embodiment of the present application provides an inflation mechanism, including:
an air pump; and
an air path, where one end of the air path is connected to an output end of the air pump, and the other end of the air path is configured to communicate with a printing chamber of a printing module.

In some embodiments, the inflation mechanism further includes a circuit board, where the air pump is connected to the circuit board.

In some embodiments, the inflation mechanism further includes a pressure relief pipeline and a pressure relief valve, where one end of the pressure relief pipeline communicates with the air path, the pressure relief valve communicates with the other end of the pressure relief pipeline, and the pressure relief valve is configured to open and close the pressure relief pipeline.

In some embodiments, the inflation mechanism further includes a detection pipeline and an air pressure detector, where one end of the detection pipeline communicates with the air path, the air pressure detector communicates with the other end of the detection pipeline, and the air pressure detector is configured to detect an air pressure in the detection pipeline.

According to a second aspect, an embodiment of the present application provides a printing device, including a main body and an inflation mechanism, where the inflation mechanism is connected to the main body, and the inflation mechanism is configured to inflate a printing chamber of a printing module.

In some embodiments, the main body includes a base, the base is configured to cooperate with a build platform of the main body, and the inflation mechanism is connected to the base.

In some embodiments, the base is provided with a recess, the inflation mechanism includes an air pump, an air path, and a circuit board, one end of the air path is connected to an output end of the air pump, the other end of the air path is configured to communicate with the printing chamber, the air pump is connected to the circuit board, and the recess is configured to accommodate the air pump, the air path, and the circuit board.

In some embodiments, the printing device further includes a connecting joint, the connecting joint is connected to the base, an end of the air path away from the air pump communicates with the connecting joint, and when the base is in contact with a platform component of the printing module, the connecting joint communicates with an air vent of the platform component.

In some embodiments, the inflation mechanism further includes a pressure relief pipeline and a pressure relief valve; and
one end of the pressure relief pipeline communicates with the air path, the pressure relief valve communicates with the other end of the pressure relief pipeline, the pressure relief valve is configured to open and close the pressure relief pipeline, and the pressure relief pipeline and the pressure relief valve are both disposed in the recess.

In some embodiments, the inflation mechanism further includes a detection pipeline and an air pressure detector; and
one end of the detection pipeline communicates with the air path, the air pressure detector communicates with the other end of the detection pipeline, the air pressure detector is configured to detect an air pressure in the detection pipeline, and the detection pipeline and the air pressure detector are both disposed in the recess.

In some embodiments, the printing device further includes a connecting component, the connecting component is disposed in the recess, and the connecting component is configured to detachably connect the air pump within the recess.

In some embodiments, the connecting component includes:
a housing, disposed in the recess; and
a clamp, where a first accommodating space is defined between the clamp and the housing, the first accommodating space is configured to accommodate the air pump, and the clamp is detachably connected to the housing.

In some embodiments, the air path, the pressure relief pipeline, and the detection pipeline are all configured as flexible tubes, and the air path, the pressure relief pipeline, and the detection pipeline are all disposed between the housing and an inner wall of the recess.

In some embodiments, the air pump is disposed in the recess along a direction perpendicular to a movement direction of the build platform, the circuit board is disposed on a side of the air pump away from the air path, and the pressure relief valve and the air pressure detector are connected to the circuit board.

In some embodiments, a second accommodating space is defined between the circuit board and a bottom wall of the recess, the second accommodating space is configured to accommodate the air pump, and the connecting component is configured to detachably connect the circuit board to the base to detachably connect the air pump within the recess.

In some embodiments, the connecting component includes at least one bolt, which passes through the circuit board and is configured to be threadedly connected to the base.

In some embodiments, the connecting component further includes a cylinder, the cylinder is disposed in the recess, and one end of the air pump is configured to be inserted into or detached from the cylinder.

In some embodiments, the printing device further includes a cushion disposed between the air pump and the cylinder.

In some embodiments, the air pump is disposed in the second accommodating space in a direction parallel to a movement direction of the build platform, the pressure relief valve is disposed in the second accommodating space, and the air pressure detector is connected to the circuit board.

In some embodiments, the printing device further includes an air joint, the air joint is threadedly connected to the base, one end of the air joint communicates with the printing chamber, the other end of the air joint communicates with the air path, and the air path is detachably connected to the base through the air joint.

According to a third aspect, an embodiment of the present application provides a printing system, including a printing module and a printing device, where the printing device includes a main body and an inflation mechanism, the inflation mechanism is connected to the main body, and the inflation mechanism is configured to inflate a printing chamber of the printing module.

Embodiments of the present application provide an inflation mechanism, a printing device, and a printing system. The inflation mechanism provided by the present application uses an air pump and an air path to inflate a printing chamber of a printing module, which can promote a self-leveling process for a liquid surface of a resin. During switching between printed layers, the air flow can apply a uniform pressure on the surface of the resin, thereby accelerating the flow of the resin and reducing surface ripples or depressions, inhibiting the generation of printed layer lines, improving the interlayer bonding quality and the surface flatness of the printed object, shortening the waiting time required for each layer of the resin to spread and stabilize, and improving the printing efficiency. When the air pump inflates the printing chamber through the air path, the air flow can also apply a downward force on a light-transmitting component at the bottom of the printing chamber. In this way, when the build platform rises in the printing chamber, the separation between the build platform and the light-transmitting component is accelerated, thereby further shortening the waiting time for the build platform to cure the next layer, and further improving the printing efficiency.

### BRIEF DESCRIPTION OF DRAWINGS

The drawings herein, which are incorporated into and constitute a part of this specification, illustrate embodiments consistent with the present application, and are used in conjunction with the specification to explain the principles of the present application.
FIG. 1 is a schematic structural diagram of an inflation mechanism according to the present application.
FIG. 2 is a schematic structural diagram of a printing device according to the present application.
FIG. 3 is a schematic structural diagram of FIG. 2 from another angle.
FIG. 4 is a schematic exploded structural diagram of a clamp, an air pump, a housing, and a base in FIG. 2.
FIG. 5 is another schematic structural diagram of a printing device according to the present application.
FIG. 6 is a schematic diagram illustrating a partial structure of FIG. 5.
FIG. 7 is a schematic exploded structural diagram of a circuit board and a base in FIG. 5.
FIG. 8 is a schematic cross-sectional structural diagram of a cylinder, an air pump, and a cushion of a printing device according to the present application.
FIG. 9 is a schematic structural diagram of a connecting joint and an air vent of a printing device according to the present application in an inserted state.

### Description of Reference Numerals:

100, base; 110, recess; 120, frame; 130, connecting joint;
210, air pump; 220, circuit board; 221, second accommodating space; 230: air path; 240, pressure relief valve; 250, air pressure detector; 260, pressure relief pipeline; 270, detection pipeline;
300, connecting component; 310, housing; 320, clamp; 321, first accommodating space; 330, bolt; 340, cylinder;
400, cushion;
500, air joint;
600, material box;
700, outer cylinder; 710, inner cylinder; 720, build platform; 730, air vent; 740, printing chamber.

Specific embodiments of the present application have been shown in the above drawings, and will be described in more detail below. These drawings and text descriptions are not intended to limit the scope of the concept of the present application in any way, but are intended to illustrate the concept of the present application for those skilled in the art by referring to specific embodiments.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present application. Instead, they are merely examples of apparatuses and methods consistent with some aspects of the present application as detailed in the appended claims.

In the related technical field, a light-curing 3D printing device includes a material box, a build platform, and a light source disposed below the material box. During a printing process, the light source projects light with a specific pattern upward from a bottom of the material box. The light passes through a light-transmitting component at the bottom of the material box, and then irradiates a liquid surface area of a photosensitive resin inside the material box. Upon receiving the light, the photosensitive resin undergoes a photo-polymerization reaction, so that the photosensitive resin changes from a liquid state to a solid state. An exposure pattern of the light source is controlled layer by layer to be consistent with a slice contour of a three-dimensional model, so that the resin can be cured layer by layer according to a preset shape. Each newly cured layer is attached to the build platform or a previous cured printed layer. This process is repeated, ultimately constructing a complete physical printed object on the build platform.

However, in the related art, there is an efficiency bottleneck in the actual printing process. Each time a layer is cured, the build platform needs to be lifted upward to allow fresh resin to flow into and cover the cured area. This process depends on the self-leveling of the resin. Especially in dental applications, the used photosensitive resin generally has a relatively high viscosity, resulting in a slow self-leveling speed, thereby extending the interlayer waiting time and affecting the overall printing efficiency. In addition, in order to enable the newly cured layer to be smoothly peeled off from a light-transmitting film at the bottom of the material box, the build platform often needs to be lifted a relatively large distance, which further increases the non-printing time and restricts the increase in the printing speed.

The technical solutions of the present application and how the technical solutions of the present application solve the above technical problems will be described in detail below with specific embodiments. The following specific embodiments may be combined with each other, and the same or similar concepts or processes may not be repeated in some embodiments. The embodiments of the present application will be described below with reference to the accompanying drawings.

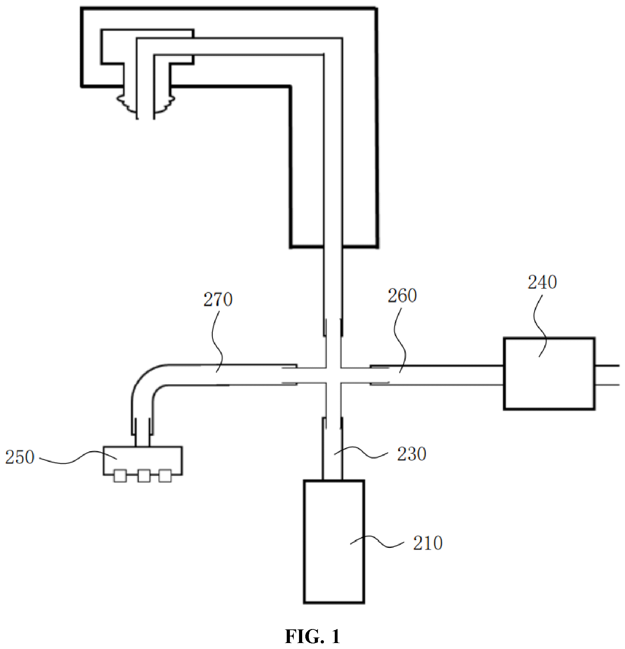

As shown in FIG. 1, an embodiment of the present application provides an inflation mechanism, including an air pump 210 and an air path 230, where one end of the air path 230 is connected to an output end of the air pump 210, and the other end of the air path 230 is configured to communicate with a printing chamber 740 of a printing module.

By adopting the above technical solution, the air pump 210 and the air path 230 are used to inflate the printing chamber 740, which can promote a self-leveling process for a liquid surface of a resin. During switching between printed layers, the air flow can apply a uniform pressure on the surface of the resin, thereby accelerating the flow of the resin and reducing surface ripples or depressions, inhibiting the generation of printed layer lines, improving the interlayer bonding quality and the surface flatness of the printed object, shortening the waiting time required for each layer of the resin to spread and stabilize, and improving the printing efficiency. When the air pump 210 inflates the printing chamber 740 through the air path 230, the air flow can also apply a downward force on a light-transmitting component at the bottom of the printing chamber 740. In this way, when a build platform 720 rises in the printing chamber 740, the separation between the build platform 720 and the light-transmitting component is accelerated, thereby further shortening the waiting time for the build platform 720 to cure the next layer, and further improving the printing efficiency.

In other embodiments, the inflation mechanism may also adopt a solenoid valve pulse air pressure system, a piezoelectric micro-jet device, or a thermal expansion and pressurization method. The solenoid valve pulse air pressure system turns on and off a solenoid valve at a high frequency to convert a compressed air source into a controllable pulsed airflow and inject the controllable pulsed airflow into the printing chamber 740. The piezoelectric micro-jet device uses an inverse piezoelectric effect of a piezoelectric ceramic piece to generate a micro-jet of gas. The thermal expansion and pressurization method generates a positive pressure using the principle of thermal expansion and contraction of gases by controllably heating a closed air cavity in the printing chamber 740, without an external air path 230, resulting in a more simplified structure.

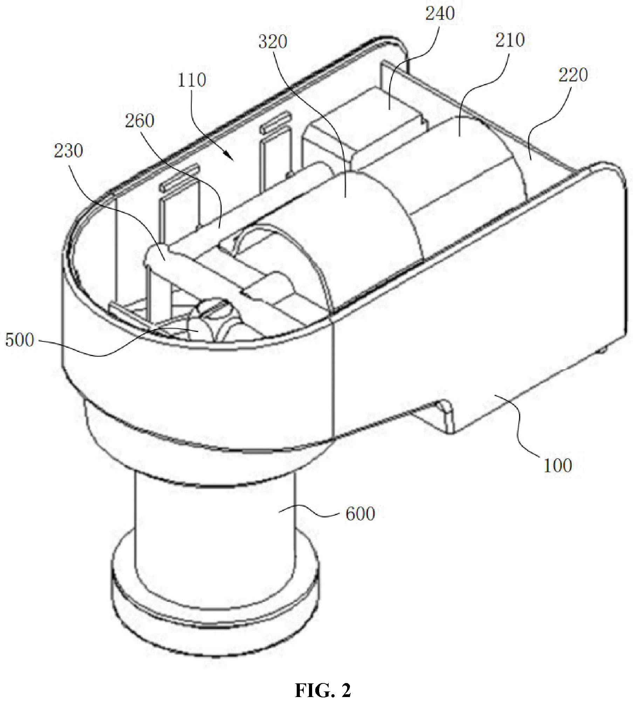

With reference to FIG. 1 and FIG. 2, the inflation mechanism further includes a circuit board 220, and the air pump 210 is connected to the circuit board 220.

By adopting the above technical solution, the function of the circuit board 220 is to regulate and control, through a preset program or by receiving an external command, start/stop and operating duration of the air pump 210, and the intensity and rhythm of the air pressure output from the air pump 210. By directly connecting the circuit board 220 with the air pump 210, the space occupation by the air pump 210 and the circuit board 220 is reduced, eliminating the need for a long cable to electrically connect the air pump 210 and the circuit board 220.

As shown in FIG. 1, the inflation mechanism further includes a pressure relief pipeline 260 and a pressure relief valve 240, one end of the pressure relief pipeline 260 communicates with the air path 230, the pressure relief valve 240 communicates with the other end of the pressure relief pipeline 260, and the pressure relief valve 240 is configured to open and close the pressure relief pipeline 260.

By adopting the above technical solution, the pressure relief pipeline 260 and the pressure relief valve 240 are used to release pressure from the printing chamber 740. The pressure relief valve 240 opens the pressure relief pipeline 260 when needed, so that an interior of the printing chamber 740 communicates with the atmosphere, thereby quickly discharging the air inside the printing chamber 740 to reduce pressure. During the inflation or pressure maintaining process, the pressure relief valve 240 closes the pressure relief pipeline 260 to ensure that the air path 230 is effectively sealed, thereby ensuring that the inflation mechanism can successfully increase the internal pressure of the printing chamber 740.

As shown in FIG. 1, the inflation mechanism further includes a detection pipeline 270 and an air pressure detector 250, one end of the detection pipeline 270 communicates with the air path 230, the air pressure detector communicates with the other end of the detection pipeline 270, and the air pressure detector 250 is configured to detect an air pressure in the detection pipeline 270.

In this embodiment, the air pressure detector 250 is an air pressure sensor.

In the present application, by adopting the arrangement of the air pressure detector 250, it is ensured that the air pressure applied to the printing chamber 740 is stable and uniform, preventing turbulence or depressions on the surface of the resin due to pressure fluctuations. When the pressure exceeds a safety threshold, a protection mechanism can be triggered immediately, for example, a solenoid valve is turned on for pressure relief or an indicator light is activated to prompt the operator, so as to prevent damage to the printing module due to overpressure. The air pressure detector 250 cooperates with the controller to dynamically adjust the output of the air pump 210 according to the real-time air pressure feedback, so as to improve the reliability of the printing process while ensuring the optimal leveling effect.

In other embodiments, the air pressure sensor may be a piezoresistive pressure sensor, a capacitive pressure sensor, a digital air pressure sensor, or an inductive pressure sensor.

The piezoresistive pressure sensor uses a piezoresistive effect of a silicon material to realize pressure sensing. A Wheatstone bridge structure is integrated inside the piezoresistive pressure sensor, which can provide good sensitivity and millisecond-level fast response. The capacitive pressure sensor operates based on the principle that the deformation of a metal or silicon film causes a change in a spacing between capacitor plates, and its structure essentially has the characteristic of low power consumption. The digital air pressure sensor can directly output a digital air pressure value after temperature compensation and linearization processing, which simplifies the system design complexity. The inductive pressure sensor adopts the electromagnetic induction principle between a coil and a magnetic core, and detects the pressure through a change in an inductance caused by the displacement of the magnetic core. And, the inductive pressure sensor has strong mechanical structure and non-contact measurement mode, making it adapt to the industrial environment with vibration and impact.

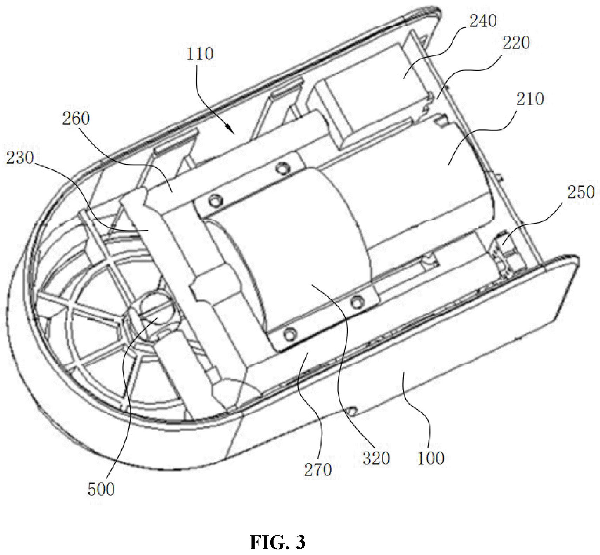

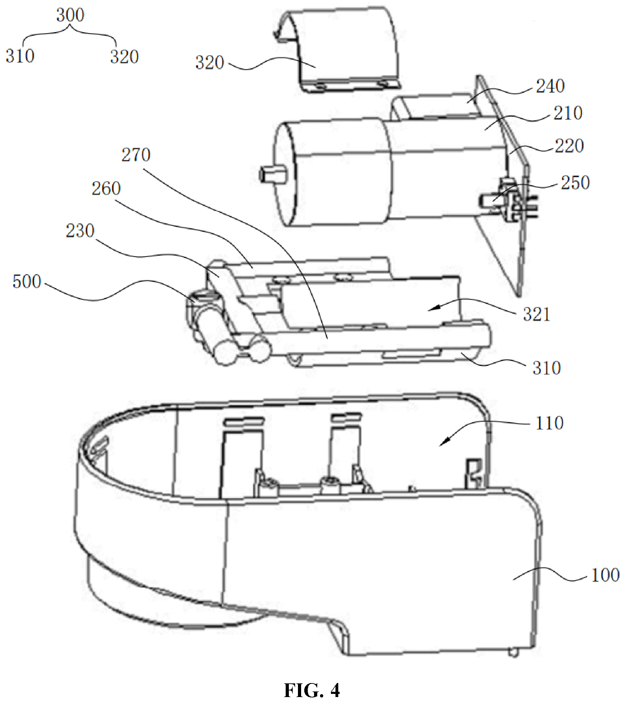

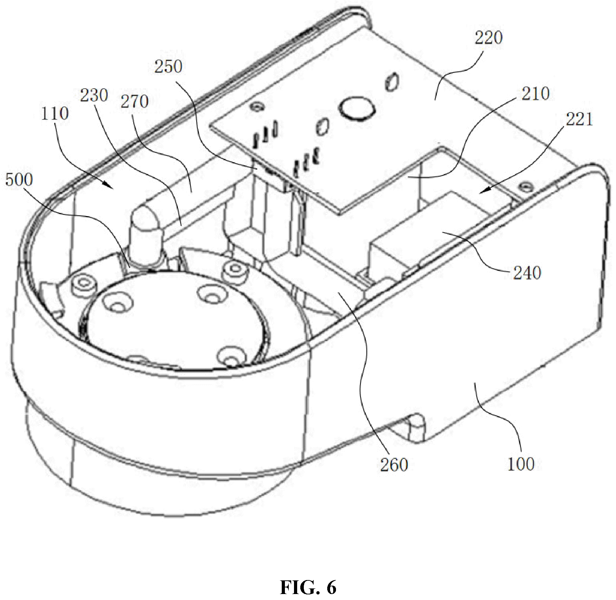

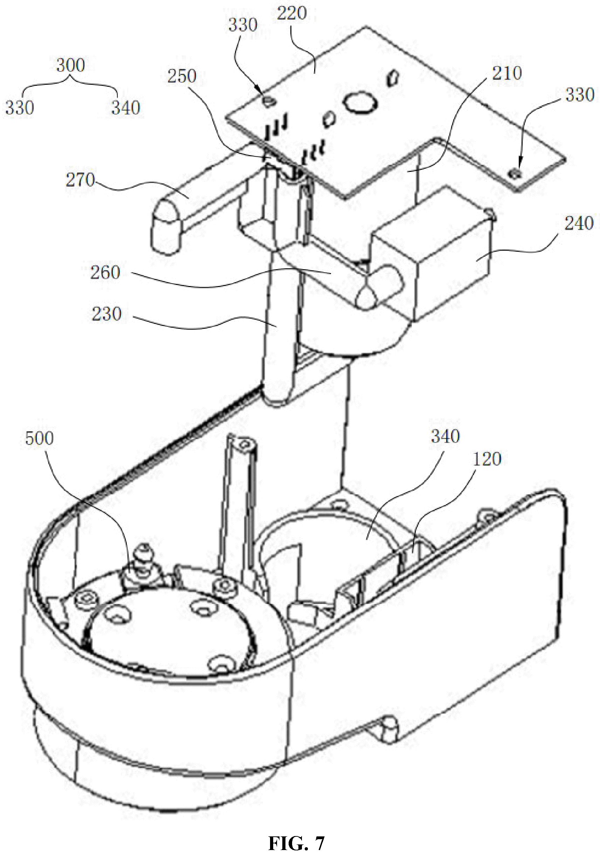

With reference to FIG. 2 to FIG. 9, an embodiment of the present application further provides a printing device, including a main body and an inflation mechanism, where the inflation mechanism is connected to the main body, and the inflation mechanism is configured to inflate a printing chamber 740 of a printing module.

The inflation mechanism adopts the inflation mechanism of any one of the above embodiments.

In some embodiments, the printing module includes a material box 600, with the printing chamber 740 disposed inside the material box 600. The material box 600 is provided, at the bottom thereof, with a light-transmitting component for light to enter the printing chamber 740. A build platform 720 is slidably provided within the material box 600. When the air pump 210 inflates the material box 600 through the air path 230 to increase the air pressure in the printing chamber 740, the light-transmitting component at the bottom of the material box 600 is subjected to a downward force, which can accelerate the separation between the build platform 720 and the light-transmitting component.

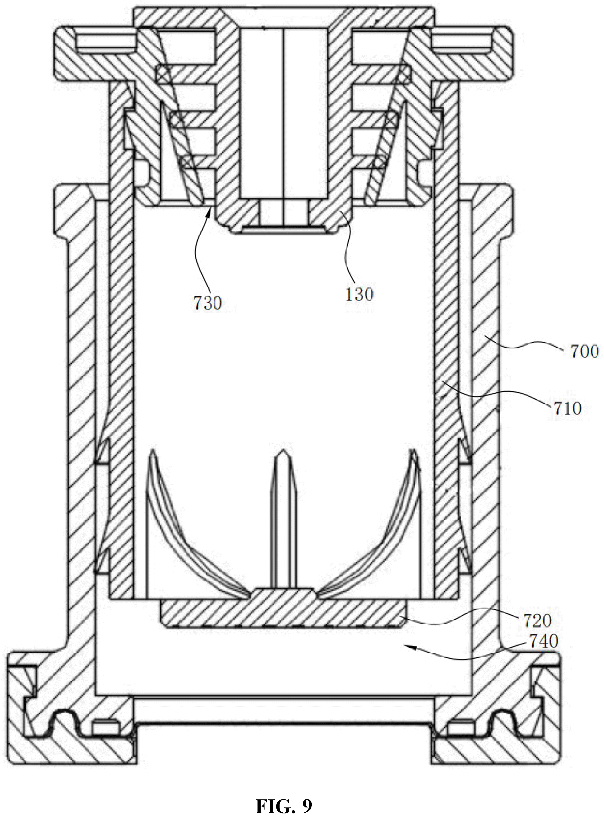

As shown in FIG. 9, in some embodiments, the printing module includes an outer cylinder 700 and a platform component. The light-transmitting component is provided at the bottom of the outer cylinder 700. The platform component includes an inner cylinder 710. The build platform 720 is provided at the bottom of the inner cylinder 710. The inner cylinder 710 is inserted into the outer cylinder 700. An outer sidewall of the inner cylinder 710 is slidably and sealingly connected to an inner sidewall of the outer cylinder 700. The outer cylinder 700 is partitioned by the inner cylinder 710 to form a build cavity. The build cavity is located at the bottom of the outer cylinder 700. The inner cylinder 710 communicates with the build cavity, and the build cavity and the inner cylinder 710 jointly constitute the printing chamber 740 of the printing module.

During the separation, the inflation mechanism inflates the printing chamber 740, so that the pressure in the printing chamber 740 can be increased, and the platform component is subjected to an upward force. If the platform component is not otherwise restricted, the platform component can also move upward (that is, the platform component is driven pneumatically to move). The light-transmitting component is subjected to a downward force. The upward and downward forces together can accelerate the separation. In addition, the printing material can quickly flow and fill the molding cavity while the platform component moves upward, thereby greatly improving the printing efficiency.

The main body includes a base 100, the base 100 is configured to cooperate with the build platform 720 of the main body, and the inflation mechanism is connected to the base 100.

In some embodiments, the base 100 and the platform component are disposed separately. The main body is provided with a lifting mechanism for driving the base 100 to move up and down. The lifting mechanism is driven by a lead screw. When the base 100 moves down, the base 100 can be in contact with the platform component, so that the inflation mechanism on the base 100 cooperates with the platform component to inflate the printing chamber 740. During printing, the pressure relief valve 240 is controlled to close the pressure relief pipeline 260, so that the printing chamber 740 of the printing module is isolated from the atmosphere. When the inflation mechanism inflates the printing chamber 740, the air pressure in the printing chamber 740 is greater than the external atmospheric pressure, driving the base 100 to move up. The platform component is driven by the air pressure to move up synchronously, and meanwhile, the build platform 720 is separated from the light-transmitting component. At the same time, the inflation can apply a downward force on the light-transmitting film, thereby further accelerating the separation between the build platform 720 and the light-transmitting component. And, the printing material flows to the build cavity quickly under the action of the air pressure.

After the separation is completed, the pressure relief valve 240 is controlled to open all or part of the pressure relief pipeline 260. The air in the printing chamber 740 is discharged through the pressure relief pipeline 260 to achieve pressure relief. The base is driven to move down to drive the build platform 720 to move down to the next printing position to continue printing. The movement position of the build platform 720 can be restricted by the base 100, and the base 100 and the build platform 720 are always kept in contact during the synchronous movement of the base 100 and the build platform 720.

In other embodiments, the base 100 may be fixedly connected to the platform component, and the platform component is driven to move up and down by the base 100.

In some embodiments, the base 100 is connected to the build platform 720 in the material box 600, so that the base 100, when moving, can synchronously drive the build platform 720 to move, thereby enabling separation between the build platform 720 and the light-transmitting component. During printing, the pressure relief valve 240 is turned off to close the pressure relief pipeline 260, so that the printing chamber 740 inside the material box 600 is isolated from the atmosphere. The base 100 can drive the build platform 720 to move. When the inflation mechanism inflates the material box 600, the air pressure in the printing chamber 740 is greater than the external atmospheric pressure, and the air pressure in the material box 600 applies a downward force on the light-transmitting film, so that the separation between the build platform 720 and the light-transmitting component is further accelerated. After the separation is completed, the pressure relief valve 240 is turned on to open all or part of the pressure relief pipeline 260, and the air pressure in the material box 600 is discharged through the pressure relief pipeline 260 to prevent the air pressure from affecting the movement of the build platform 720 within the material box 600. The base 100 is controlled to move down to drive the build platform 720 to move down to the next printing position to continue printing. The build platform 720 is driven indirectly by the base 100 to move, thereby restricting the movement position of the build platform 720.

The base 100 is provided with a recess 110. The inflation mechanism includes the air pump 210, the air path 230, and the circuit board 220. One end of the air path 230 is connected to the output end of the air pump 210, and the other end of the air path 230 is configured to communicate with the printing chamber 740. The air pump 210 is connected to the circuit board 220. The recess 110 is configured to accommodate the air pump 210, the air path 230, and the circuit board 220.

With the above technical solution, by adopting the recess 110 and arranging the air pump 210, the air path 230, and the circuit board 220 in the recess 110, the air pump 210, the air path 230, and the circuit board 220 can utilize the space inside the base 100, thereby reducing the overall space occupation by the base 100, the air pump 210, the air path 230, and the circuit board 220, and indirectly reducing the space occupation by the entire printing device.

The printing device further includes a connecting joint 130. The connecting joint 130 is connected to the base 100. An end of the air path 230 away from the air pump 210 communicates with the connecting joint 130. When the base 100 is in contact with the platform component of the printing module, the connecting joint 130 communicates with the air vent 730 of the platform component.

In some embodiments, the air vent 730 is disposed on a top wall of the inner cylinder 710. When the base 100 is in contact with the platform component, the connecting joint 130 can be directly inserted into the air vent 730 to cooperate with the air vent 730, thereby communicating with the printing chamber 740 through the air vent 730.

In some embodiments, when the base 100 is not in contact with the platform component or in poor contact with the platform component, the connecting joint 130 is disengaged from or cannot be mated properly with the air vent 730. The connecting joint 130 can also be movably connected to the base 100, for example, the connecting joint 130 is movably connected to the base 100 through a bellows tube. The user can pull the connecting joint 130 to drive the bellows tube to extend, so that the connecting joint 130 is actively inserted into the air vent 730, thereby realizing the communication between the air path 230 and the printing chamber 740. In this case, the air vent 730 may be disposed on a side wall of the outer cylinder 700. Compared with the configuration in which the connecting joint 130 is fixed to the base 100, a movable connecting joint 130 has a more complex structure, is less aesthetically pleasing, and is more prone to wear and tear.

The inflation mechanism further includes the pressure relief pipeline 260 and the pressure relief valve 240. One end of the pressure relief pipeline 260 communicates with the air path 230, the pressure relief valve 240 communicates with the other end of the pressure relief pipeline 260, the pressure relief valve 240 is configured to open and close the pressure relief pipeline 260, and the pressure relief pipeline 260 and the pressure relief valve 240 are both disposed in the recess 110.

By adopting the above technical solution, the pressure relief pipeline 260 and the pressure relief valve 240 are used to release the pressure from the material box 600. The pressure relief valve 240 opens the pressure relief pipeline 260 when needed, so that the inner cavity of the material box 600 communicates with the atmosphere, and the air inside the material box 600 is quickly discharged to reduce the pressure. And, during the inflation or pressure maintaining process, the pressure relief valve 240 closes the pressure relief pipeline 260 to ensure that the air path 230 is effectively sealed, thereby ensuring that the inflation mechanism can successfully increase the internal pressure of the material box 600.

The pressure relief pipeline 260 and the pressure relief valve 240 are disposed in the recess 110, so that the pressure relief pipeline 260 and the pressure relief valve 240 can utilize the space in the recess 110, thereby reducing the space occupation by the pressure relief pipeline 260, the pressure relief valve 240, and the base, and indirectly reducing the space occupation by the printing device.

The inflation mechanism further includes the detection pipeline 270 and the air pressure detector 250. One end of the detection pipeline 270 communicates with the air path 230, and the air pressure detector 250 communicates with the other end of the detection pipeline 270, the air pressure detector 250 is configured to detect the air pressure in the detection pipeline 270, and the detection pipeline 270 and the air pressure detector 250 are both disposed in the recess 110.

In this embodiment, the air pressure detector 250 is an air pressure sensor.

In the present application, by adopting the arrangement of the air pressure detector 250, it is ensured that the air pressure applied to the material box 600 is stable and uniform, preventing turbulence or depressions on the surface of the resin due to pressure fluctuations. When the pressure exceeds the safety threshold, the protection mechanism can be triggered immediately, for example, the solenoid valve is turned on for pressure relief or the indicator light is activated to prompt the operator, so as to prevent damage to the resin material box 600 due to overpressure. The air pressure detector 250 cooperates with the controller to dynamically adjust the output from the air pump 210 according to the real-time air pressure feedback, so as to improve the reliability of the printing process while ensuring the optimal leveling effect.

The detection pipeline 270 and the air pressure detector 250 are disposed in the recess 110, so that the detection pipeline 270 and the air pressure detector 250 can utilize the space in the recess 110, thereby reducing the space occupation by the detection pipeline 270, the air pressure detector 250, and the base, and indirectly reducing the space occupation by the printing device.

The printing device further includes a connecting component 300, the connecting component 300 is disposed in the recess 110, and the connecting component 300 is configured to detachably connect the air pump 210 within the recess 110.

With the above technical solution, by adopting the arrangement of the connecting component 300, the connecting component 300 can detachably connect the air pump 210 in the recess 110. When the air pump 210 is removed, the air pump 210 can drive the air path 230 and the circuit board 220 to be removed, thereby facilitating the maintenance of the inflation mechanism and indirectly prolonging the service life of the inflation mechanism.

In some embodiments, the base 100 is provided with a cover plate to close the recess 110, thereby preventing dust from affecting the inflation mechanism. The cover plate may be fixed to the base 100 by means of screw connection, snap-fit connection, or magnetic attachment.

With reference to FIG. 2, FIG. 3, and FIG. 4, in some embodiments, the connecting component 300 includes a housing 310 and a clamp 320. The housing 310 is disposed in the recess 110. A first accommodating space 321 is defined between the clamp 320 and the housing 310, and the first accommodating space 321 is configured to accommodate the air pump 210, and the clamp 320 is detachably connected to the housing 310.

In this embodiment, both the housing 310 and the clamp 320 are arc-shaped. The arc-shaped housing 310 and the arc-shaped clamp 320 cooperate with an outer wall of the air pump 210, thereby preventing the air pump 210 from moving between the housing 310 and the clamp 320, and indirectly improving the fixing strength of the air pump 210.

In the present application, by using the housing 310 and the clamp 320, the air pump 210 can be positioned within the recess 110, preventing deviation of the mounting position of the air pump 210, thereby indirectly improving the fixing strength of the air pump 210.

In this embodiment, two screws are provided at each of two ends of the clamp 320. The screws penetrate through the clamp 320, and the screws are used for threaded connection with the housing 310. The clamp 320 is detachably connected to the housing 310 through the screws. This arrangement of the screws enhances the fixing strength between the clamp 320 and the housing 310. Moreover, the assembly and disassembly of the air pump 210 can be realized simply by tightening or loosening the screws, thereby improving the convenience of assembly and disassembly of the air pump 210.

In other embodiments, one end of the clamp 320 may be hinged to the housing 310, and the other end of the clamp 320 may be detachably connected to the housing 310 through screws, thereby further improving the convenience of disassembly and assembly of the air pump 210 by reducing the number of the screws. Alternatively, the clamp 320 may be snap-fit with the housing 310, so that disassembly and assembly of the air pump 210 can be realized without screws.

With reference to FIG. 2, FIG. 3, and FIG. 4, the air path 230, the pressure relief pipeline 260, and the detection pipeline 270 are all configured as flexible tubes. The air path 230, the pressure relief pipeline 260, and the detection pipeline 270 are all disposed between the housing 310 and an inner wall of the recess 110.

In this embodiment, the flexible tube is configured as a silicone tube. In other embodiments, the flexible tube may be replaced with a rubber tube.

In this embodiment, the air path 230, the pressure relief pipeline 260, and the detection pipeline 270 form a U-shaped structure to surround the housing 310. The pressure relief pipeline 260 and the detection pipeline 270 are respectively disposed on opposite sides of the housing 310. The air path 230 is connected between the pressure relief pipeline 260 and the detection pipeline 270.

In the present application, when the air is delivered through the air path 230, the pressure relief pipeline 260, and the detection pipeline 270, since the silicone materials of the air path 230, the pressure relief pipeline 260, and the detection pipeline 270 have high flexibility and damping characteristics, the air path 230, the pressure relief pipeline 260, and the detection pipeline 270 become a flexible buffer module. When mechanical vibrations generated by the air pump 210 in operation are transmitted through the housing 310 to the silicone tubes, the silicone molecular chain will undergo recoverable flexible deformation, which can effectively absorb and dissipate the vibration energy, reducing the transmission of the vibrations to the base 100 and the entire printing device, so as to reduce displacement of the printing head due to the vibrations, and help to improve the accuracy and stability of the printing process.

The air pump 210 is disposed in the recess 110 in a direction perpendicular to a movement direction of the build platform 720. The circuit board 220 is disposed on a side of the air pump 210 away from the air path 230. The pressure relief valve 240 and the air pressure detector 250 are connected to the circuit board 220.

In this embodiment, the circuit board 220 is perpendicular to a bottom wall of the recess 110. When the air pump 210 is fixed in the recess 110, the air pump 210 can drive the circuit board 220 to be fixed in the recess 110, so that the circuit board 220 does not need to be separately fixed, thereby improving the convenience of the inflation mechanism during assembly and disassembly.

In this embodiment, the air pump 210 is disposed in the recess 110 in the direction perpendicular to the movement direction of the build platform 720. Specifically, an air outlet direction of the air pump 210 is orientated perpendicular to the movement direction of the build platform 720. The air pump 210 is a cylinder, an axial direction of the cylindrical air pump 210 is perpendicular to the movement direction of the build platform 720. The air pump 210 is disposed in the recess 110 in a horizontal direction.

In this embodiment, the pressure relief valve 240 and the air pressure detector 250 are disposed on the same side of the circuit board 220 as the air pump 210, and the pressure relief valve 240 and the air pressure detector 250 are respectively disposed on opposite sides of the air pump 210. As a result, the pressure relief valve 240 and the air pressure detector 250 can utilize the space on two sides of the air pump 210, and no additional space is required to arrange the pressure relief valve 240 and the air pressure detector 250, thereby reducing the space occupation by the pressure relief valve 240 and the air pressure detector 250.

By arranging the air pump 210 in the recess 110 in the direction perpendicular to the movement direction of the build platform 720, the air pump 210 utilizes the space within the base 100 in the horizontal direction, thereby reducing the space occupation by the air pump 210 and the base 100. By connecting the pressure relief valve 240 and the air pressure detector 250 with the circuit board 220, when the air pump 210 drives the circuit board 220 to be removed, the circuit board 220 can drive the pressure relief valve 240, the air pressure detector 250, the pressure relief pipeline 260, and the detection pipeline 270 to be synchronously removed, thereby facilitating the maintenance and replacement of the pressure relief valve 240, the air pressure detector 250, the pressure relief pipeline 260, and the detection pipeline 270.

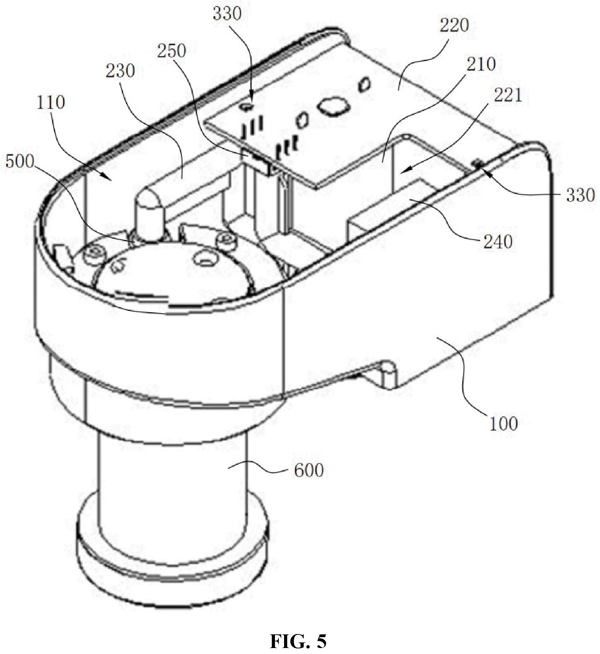

With reference to FIG. 5, FIG. 6, and FIG. 7, in some embodiments, a second accommodating space 221 is defined between the circuit board 220 and the bottom wall of the recess 110. The second accommodating space 221 is configured to accommodate the air pump 210. The connecting component 300 is configured to detachably connect the circuit board 220 and the base 100, to detachably connect the air pump 210 in the recess 110.

In the present application, the circuit board 220 is detachably connected to the base 100 through the connecting component 300. When the circuit board 220 is fixed to the base 100, the circuit board 220 can drive the air pump 210 to be fixed in the recess 110. When the circuit board 220 is separated from the base 100, the circuit board 220 can drive the air pump 210 to be removed from the recess 110, so that the air pump 210 does not need to be separately fixed, and the circuit board 220 can indirectly fix the air pump 210, thereby improving convenience of assembly and disassembly of the air pump 210.

With reference to FIG. 5, FIG. 6, and FIG. 7, the connecting component 300 includes at least one bolt 330, which passes through the circuit board 220 and is configured to be threadedly connected to the base 100.

In this embodiment, the connecting component 300 includes two bolts 330, which are respectively disposed on two sides of the circuit board 220. Fixing posts are disposed on an inner wall of the base 100 at positions where the two bolts 330 are located. The bolts 330 are used for insertion and threaded connection to the fixing posts. In other embodiments, the number and positions of the bolts 330 can be adaptively adjusted as needed.

In the present application, by adopting the arrangement of the bolts 330, fixing strength between the circuit board 220 and the base 100 is improved, thereby indirectly improving the fixing strength of the air pump 210. The assembly and disassembly of the circuit board 220 and the air pump 210 can be realized simply by tightening or loosening the bolts 330, which improves the convenience of assembly and disassembly of the circuit board 220 and the air pump 210.

With reference to FIG. 5, FIG. 6, and FIG. 7, the connecting component 300 further includes a cylinder 340. The cylinder 340 is disposed in the recess 110, and one end of the air pump 210 is configured to be inserted into or detached from the cylinder 340.

In the present application, by adopting the arrangement of the cylinder 340, when the circuit board 220 drives the air pump 210 to move toward the recess 110, one end of the air pump 210 is inserted into the cylinder 340, so that the cylinder 340 positions the air pump 210 in the recess 110, to prevent deviation of the mounting position of the air pump 210, thereby indirectly improving the fixing strength of the air pump 210.

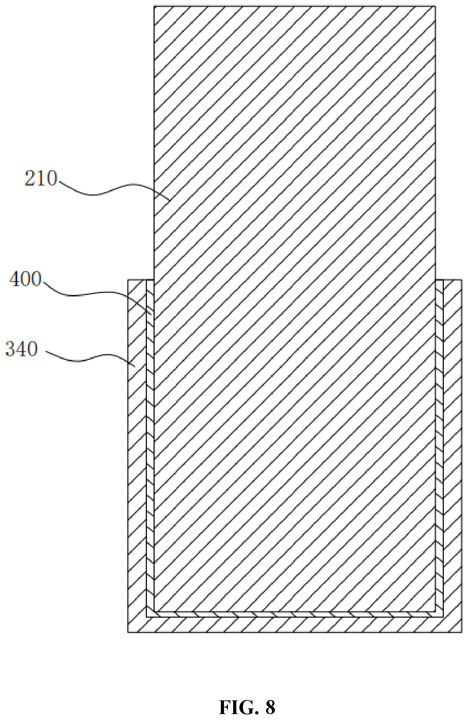

As shown in FIG. 8, the printing device further includes a cushion 400, which is disposed between the air pump 210 and the cylinder 340.

In this embodiment, the cushion 400 is configured as a silicone pad. In other embodiments, the cushion 400 may be replaced with a rubber pad.

In this embodiment, the cushion 400 is provided on both a side wall of the cylinder 340 and a bottom wall of the cylinder 340, and the cushion 400 abuts against the air pump 210.

In the present application, the silicone material of the cushion 400 has high flexibility and damping characteristics, so that the cushion 400 can form a flexible buffer module. When the mechanical vibrations generated by the air pump 210 in operation are transmitted to the cushion 400 through the cylinder 340, the silicone molecular chain will undergo recoverable flexible deformation, which can effectively absorb and dissipate the vibration energy, reducing the transmission of the vibrations to the base 100 and the entire printing device. This reduces the displacement of the print head due to the vibrations, thereby helping to improve the accuracy and stability of the printing process.

With reference to FIG. 5, FIG. 6, and FIG. 7, the air pump 210 is disposed in the second accommodating space 221 in a direction parallel to the movement direction of the build platform 720. The pressure relief valve 240 is disposed in the second accommodating space 221. The air pressure detector 250 is connected to the circuit board 220.

In this embodiment, the air pump 210 is disposed in the recess 110 in the direction parallel to the movement direction of the build platform 720. Specifically, an air outlet direction of the air pump 210 is orientated parallel to the movement direction of the build platform 720. The air pump 210 is a cylinder, and an axial direction of the cylindrical air pump 210 is parallel to the movement direction of the build platform 720. The air pump 210 is disposed in the recess 110 in a vertical direction, and a driving end of the air pump 210 is orientated downward.

In this embodiment, the circuit board 220 is disposed in a horizontal direction, the circuit board 220 is disposed above the air pump 210, and the output end of the air pump 210 faces away from the circuit board 220.

In this embodiment, a frame 120 is provided in the base 100, and the pressure relief valve 240 is configured to be inserted into the frame 120 to be fixed to the base 100 by friction, so that the pressure relief valve 240 does not need to be separately assembled and disassembled, thereby improving the efficiency of assembly and disassembly of the pressure relief valve 240. The pressure relief valve 240 and the air pressure detector 250 are disposed on the same side of the circuit board 220 as the air pump 210, and no additional space is required to arrange the pressure relief valve 240 and the air pressure detector 250, thereby reducing the space occupation by the pressure relief valve 240 and the air pressure detector 250.

By adopting the above technical solution, the circuit board 220 is disposed above the air pump 210, so that the air pump 210 can be conveniently removed through the circuit board 220. The air pump 210 is disposed in the second accommodating space 221 in the direction parallel to the movement direction of the build platform 720, and the space of the base 100 in a height direction is utilized, thereby reducing the space occupation by the air pump 210 and the base 100. When the circuit board 220 is removed, the circuit board 220 can drive the air pressure detector 250 and the detection pipeline 270 to be removed synchronously. At this time, the pressure relief valve 240 is removed from the frame 120, so that the pressure relief valve 240 drives the pressure relief pipeline 260 to be removed, thereby facilitating the maintenance and replacement of the pressure relief valve 240 and the air pressure detector 250 as well as the pressure relief pipeline 260 and the detection pipeline 270.

The printing device further includes an air joint 500. The air joint 500 is in threaded connection with the base 100, one end of the air joint 500 communicates with the printing chamber 740, the other end of the air joint 500 communicates with the air path 230, and the air path 230 is detachably connected to the base 100 through the air joint 500.

In some embodiments, when the connecting joint 130 is disposed on an outer wall of the base 100, one end of the air joint 500 may be inserted into the connecting joint 130, so that when the base 100 is in contact with the platform component, the connecting joint 130 is inserted into the air vent 730, and one end of the air joint 500 communicates with the printing chamber 740 through the connecting joint 130 and the air vent 730.

In the present application, by adopting the arrangement of the air joint 500, when the air pump 210 is removed, the air pump 210 can drive the air path 230 to be removed from the base 100, thereby facilitating maintenance and replacement of the air path 230, and further increasing the service life of the inflation mechanism.

According to the printing device provided in the present application, the inflation mechanism is provided. When the air pump 210 and the air path 230 need to be removed for maintenance, the screws are removed from the clamp 320, so that the clamp 320 is separated from the housing 310, and the air joint 500 is unscrewed from the base 100, so that the air pump 210 drives the circuit board 220, the air pressure detector 250, the pressure relief valve 240, and the air path 230 to be removed from the recess 110, thereby facilitating maintenance of the circuit board 220, the air pressure detector 250, the pressure relief valve 240, and the air path 230, and indirectly prolonging the service life of the circuit board 220, the air pressure detector 250, the pressure relief valve 240, and the air path 230.

When the air pump 210 and the air path 230 need to be removed for maintenance, the bolts 330 are removed from the circuit board 220, and the air path 230 is unscrewed from the base 100, so that the circuit board 220 is removed from the inner wall of the recess 110, and the circuit board 220 can drive the air pump 210 to be removed from the cylinder 340. In this way, the circuit board 220 drives the air pump 210, the air pressure detector 250, and the air path 230 to be removed from the recess 110, thereby facilitating maintenance of the air pump 210, the air pressure detector 250, and the air path 230, and indirectly prolonging the service life of the air pump 210, the air pressure detector 250, and the air path 230.

By disposing the air pump 210, the circuit board 220, the air path 230, the pressure relief valve 240, the pressure relief pipeline 260, the detection pipeline 270, and the air pressure detector 250 in the recess 110, the space occupation by the air pump 210, the circuit board 220, the air path 230, the pressure relief valve 240, the pressure relief pipeline 260, the detection pipeline 270, and the air pressure detector 250 is reduced by utilizing the space inside the base 100, thereby indirectly reducing the space occupation by the printing device.

An embodiment of the present application further provides a printing system, including a printing module and a printing device, where the printing device includes a main body and an inflation mechanism, the inflation mechanism is connected to the main body, and the inflation mechanism is configured to inflate a printing chamber 740 of the printing module.

The printing device adopts the printing device of any one of the above embodiments.

The specific structures of the printing module, the printing device, and the inflation mechanism have been described in detail in the above embodiments, and will not be repeated herein.

Other implementations of the present application will be apparent to those skilled in the art from consideration of the specification and practice of the present disclosure herein. The present application is intended to cover any variations, uses, or adaptive changes of the present application that follow the general principles of the present application and include common knowledge or conventional technical means in the art that are not disclosed in the present application, and is not limited to the precise structures that have been described above and shown in the accompanying drawings, and various modifications and changes can be made without departing from the scope thereof. The scope of the present application is limited only by the appended claims.

## Claims

1. An inflation mechanism, comprising:
an air pump (210); and
an air path (230), wherein one end of the air path (230) is connected to an output end of the air pump (210), and the other end of the air path (230) is configured to communicate with a printing chamber (740) of a printing module.

2. The inflation mechanism according to claim 1, further comprising a circuit board (220), wherein the air pump (210) is connected to the circuit board (220).

3. The inflation mechanism according to claim 1, further comprising a pressure relief pipeline (260) and a pressure relief valve (240), wherein one end of the pressure relief pipeline (260) communicates with the air path (230), the pressure relief valve (240) communicates with the other end of the pressure relief pipeline (260), and the pressure relief valve (240) is configured to open and close the pressure relief pipeline (260).

4. The inflation mechanism according to claim 1, further comprising a detection pipeline (270) and an air pressure detector (250), wherein one end of the detection pipeline (270) communicates with the air path (230), the air pressure detector communicates with the other end of the detection pipeline (270), and the air pressure detector (250) is configured to detect an air pressure in the detection pipeline (270).

5. A printing device, comprising a main body and an inflation mechanism, wherein the inflation mechanism is connected to the main body, and the inflation mechanism is configured to inflate a printing chamber (740) of a printing module.

6. The printing device according to claim 5, wherein the main body comprises a base (100), the base (100) is configured to cooperate with a build platform (720) of the main body, and the inflation mechanism is disposed on the base (100).

7. The printing device according to claim 6, wherein the base (100) is provided with a recess (110), the inflation mechanism comprises an air pump (210), an air path (230), and a circuit board (220), one end of the air path (230) is connected to an output end of the air pump (210), the other end of the air path (230) is configured to communicate with the printing chamber (740), the air pump (210) is connected to the circuit board (220), and the recess (110) is configured to accommodate the air pump (210), the air path (230), and the circuit board (220).

8. The printing device according to claim 7, further comprising a connecting joint (130), wherein the connecting joint (130) is connected to the base (100), an end of the air path (230) away from the air pump (210) communicates with the connecting joint (130), and when the base (100) is in contact with a platform component of the printing module, the connecting joint (130) communicates with an air vent (730) of the platform component.

9. The printing device according to claim 7, wherein the inflation mechanism further comprises a pressure relief pipeline (260) and a pressure relief valve (240); and
one end of the pressure relief pipeline (260) communicates with the air path (230), the pressure relief valve (240) communicates with the other end of the pressure relief pipeline (260), the pressure relief valve (240) is configured to open and close the pressure relief pipeline (260), and the pressure relief pipeline (260) and the pressure relief valve (240) are both disposed in the recess;
and/or
wherein the inflation mechanism further comprises a detection pipeline (270) and an air pressure detector (250); and
one end of the detection pipeline (270) communicates with the air path (230), the air pressure detector (250) communicates with the other end of the detection pipeline (270), the air pressure detector (250) is configured to detect an air pressure in the detection pipeline (270), and the detection pipeline (270) and the air pressure detector (250) are both disposed in the recess (110);
and/or
wherein the printing device further comprises a connecting component (300), wherein the connecting component (300) is disposed in the recess (110), and the connecting component (300) is configured to detachably connect the air pump (210) in the recess (110).

10. The printing device according to claim 9, wherein the connecting component (300) comprises:
a housing (310), disposed in the recess (110); and
a clamp (320), wherein a first accommodating space (321) is defined between the clamp (320) and the housing (310), the first accommodating space (321) is configured to accommodate the air pump (210), and the clamp (320) is detachably connected to the housing (310);
and/or
wherein the air path (230), the pressure relief pipeline (260), and the detection pipeline (270) are all configured as flexible tubes, and the air path (230), the pressure relief pipeline (260), and the detection pipeline (270) are all disposed between the housing (310) and an inner wall of the recess (110).

11. The printing device according to claim 9, wherein the air pump (210) is disposed in the recess (110) in a direction perpendicular to a movement direction of the build platform (720), the circuit board (220) is disposed on a side of the air pump (210) away from the air path (230), and the pressure relief valve (240) and the air pressure detector (250) are connected to the circuit board (220).

12. The printing device according to claim 9, wherein a second accommodating space (221) is defined between the circuit board (220) and a bottom wall of the recess (110), the second accommodating space (221) is configured to accommodate the air pump (210), and the connecting component (300) is configured to detachably connect the circuit board (220) to the base (100) so as to detachably connect the air pump (210) in the recess (110).

13. The printing device according to claim 12, wherein the connecting component (300) comprises at least one bolt (330), which passes through the circuit board (220) and is configured to be threadedly connected to the base (100);
or
wherein the connecting component (300) further comprises a cylinder (340), the cylinder (340) is disposed in the recess (110), and one end of the air pump (210) is configured to be inserted into or detached from the cylinder (340);
and/or
wherein the printing device further comprises a cushion (400) disposed between the air pump (210) and the cylinder (340);
or
wherein the air pump (210) is disposed in the second accommodating space (221) in a direction parallel to a movement direction of the build platform (720), the pressure relief valve (240) is disposed in the second accommodating space (221), and the air pressure detector (250) is connected to the circuit board (220).

14. The printing device according to any one of claims 7 to 13, further comprising an air joint (500), wherein the air joint (500) is threadedly connected to the base (100), one end of the air joint (500) communicates with the printing chamber (740), the other end of the air joint (500) communicates with the air path (230), and the air path (230) is detachably connected to the base (100) through the air joint (500).

15. A printing system, comprising a printing module and a printing device, wherein the printing device comprises a main body and an inflation mechanism, the inflation mechanism is connected to the main body, and the inflation mechanism is configured to inflate a printing chamber (740) of the printing module.
